# EUROPÄISCHE PATENTSCHRIFT

(11) **EP 4 639 656 B1**
(45) Veröffentlichungstag und Bekanntmachung des Hinweises auf die Patenterteilung: **19.08.2026**
(21) Anmeldenummer: 23833393.4
(22) Anmeldetag: 15.12.2023
(51) Int. Cl.: H01M 8/04228, B60L 58/30, H01M 8/04303, H01M 8/04537

(54) **VERFAHREN ZUM ERMITTELN VON INFORMATIONEN EINES BRENNSTOFFZELLENSTAPELS NACH EINEM ABSCHALTEN, SOWIE FAHRZEUG**
METHOD OF GATHERING INFORMATION OF A FUEL CELL STACK AFTER SHUT-DOWN AND VEHICLE
PROCÉDÉ POUR ACCUMULER DE L'INFORMATION SUR UN PILE À COMBUSTIBLE APRÈS L'ARRÊT ET VÉHICULE

(30) Priorität: 19.12.2022 DE 102022213876
(43) Veröffentlichungstag der Anmeldung: 29.10.2025
(73) Patentinhaber: Robert Bosch GmbH, 70442 Stuttgart (DE)
(72) Erfinder: MARINO, Michael Giuseppe, 71737 Kirchberg (Murr) (DE); WESSNER, Jochen, 73728 Esslingen (DE); GERLING, Christophe, 71296 Heimsheim (DE); BERNER, Ulrich, 70176 Stuttgart (DE); HACKENBERG, Juergen, 74343 Sachsenheim (DE); SAUTER, Ulrich, 76199 Karlsruhe (DE)
(86) Internationale Anmeldenummer: PCT/EP2023/086074
(87) Internationale Veröffentlichungsnummer: WO 2024/132936

(56) Entgegenhaltungen:
- JP-B2- 6 418 245
- US-A1- 2004 072 042
- US-A1- 2011 086 284
- US-A1- 2012 308 906

## Beschreibung

### Stand der Technik

Brennstoffzellen sind elektrochemische Energiewandler, bei denen z.B. Wasserstoff und Sauerstoff in Wasser, elektrische Energie und Wärme gewandelt werden.

Impedanzmessungen können verwendet werden, um Informationen über elektrische oder elektrochemische Zustände/Eigenschaften einer Brennstoffzelle zu erhalten.

US 2012/308906 offenbart ein Verfahren zum Ermitteln von Informationen über einen Brennstoffzellenstapel eines Fahrzeuges nach einem Abschalten des Fahrzeuges.

JP 6 418245 offenbart, wie durch Anlegen eines Stromsignals mit einer bestimmten Frequenz eine Impedanz eines Brennstoffzellenstapels bestimmt werden kann.

### Offenbarung der Erfindung

Die vorliegende Erfindung zeigt ein Verfahren zum Ermitteln von Informationen über zumindest einen Stapelteil eines Brennstoffzellenstapels eines Brennstoffzellensystems eines Fahrzeuges nach einem Abschalten des Fahrzeuges gemäß den Merkmalen des Anspruchs 1, ein Fahrzeug gemäß den Merkmalen des Anspruchs 10, ein Computerprogrammprodukt gemäß den Merkmalen des Anspruchs 11, ein computerlesbares Medium gemäß den Merkmalen des Anspruchs 12 sowie ein Datenträgersignal gemäß den Merkmalen des Anspruchs 13.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug, dem erfindungsgemäßen Computerprogrammprodukt, dem erfindungsgemäßen computerlesbaren Medium und dem erfindungsgemäßen Datenträgersignal und jeweils umgekehrt, sodass bezüglich der Offenbarung zu den einzelnen Erfindungsaspekten stets wechselseitig Bezug genommen wird bzw. werden kann.

Gemäß einem ersten Aspekt zeigt die vorliegende Erfindung ein Verfahren zum Ermitteln von Informationen über zumindest einen Stapelteil eines Brennstoffzellenstapels eines Brennstoffzellensystems eines Fahrzeuges nach einem Abschalten des Fahrzeuges. Das Verfahren umfasst als einen Schritt ein Erkennen eines Abschaltbefehls für das Abschalten des Fahrzeuges. Ferner umfasst das Verfahren als einen Schritt ein Schließen eines Kathodengaseingangsventils des Brennstoffzellensystems sowie Schließen eines Kathodengasausgangsventils des Brennstoffzellensystems, um einen Kathodenbereich des Brennstoffzellenstapels mit einem in dem Kathodenbereich befindlichen Luftgemisch fluidtechnisch abzuriegeln, wenn der Abschaltbefehl erkannt wird. Ferner umfasst das Verfahren als einen Schritt ein Anlegen einer elektrischen Lastvorrichtung wenigstens an den zumindest einen Stapelteil des Brennstoffzellenstapels, um den Anteil des Sauerstoffes in dem Luftgemisch in dem abgeriegelten Kathodenbereich des Brennstoffzellenstapels zu reduzieren, wobei die Lastvorrichtung zumindest derart lange angelegt wird, bis eine vorgegebene Zielspannung erkannt wird. Ferner umfasst das Verfahren als einen Schritt ein Schließen eines Anodengaseingangsventils des Brennstoffzellensystems sowie Schließen eines Anodengasausgangsventils des Brennstoffzellensystems, um einen Anodenbereich des Brennstoffzellenstapels mit einem in dem Anodenbereich befindlichen Brennstoffgemisch fluidtechnisch abzuriegeln, wenn die vorgegebene Zielspannung erkannt wird. Ferner umfasst das Verfahren als einen Schritt ein Anlegen eines elektrischen Messsignals wenigstens an den zumindest einen Stapelteil des Brennstoffzellenstapels, insbesondere wenn das Anodengaseingangsventil und das Anodengasausgangsventil geschlossen ist. Ferner umfasst das Verfahren als einen Schritt ein Erfassen einer Signalantwort (als Reaktion) auf das angelegte elektrische Messsignal. Ferner umfasst das Verfahren als einen Schritt ein Ermitteln von Informationen wenigstens über den zumindest einen Stapelteil des Brennstoffzellenstapels des Brennstoffzellensystems basierend auf dem angelegten Messsignal sowie der erfassten Signalantwort.

Die zuvor und die im Nachfolgenden beschriebenen Verfahrensschritte können, sofern technisch sinnvoll, einzeln, zusammen, einfach, mehrfach, zeitlich parallel und/oder nacheinander in beliebiger Reihenfolge ausgeführt werden.

Das Fahrzeug ist insbesondere ein Kraftfahrzeug, vorzugsweise ein Personenkraftwagen oder ein Lastkraftwagen.

Als Stapelteil des Brennstoffzellenstapels kann eine Brennstoffzelle des Brennstoffzellenstapels oder als Stapelteil des Brennstoffzellenstapels können mehrere Brennstoffzellen des Brennstoffzellenstapels, insbesondere mehrere elektrisch in Reihe geschaltete Brennstoffzellen des Brennstoffzellenstapels, verstanden werden.

Der Brennstoffzellenstapel selbst kann eine Vielzahl an Brennstoffzellen aufweisen. Insbesondere kann der Brennstoffzellenstapel ein Polymerelektrolytmembran-Brennstoffzellenstapel sein und vorzugsweise mit Luft und einem Brennstoff, insbesondere Wasserstoff, betrieben werden.

Das Abschalten des Fahrzeugs kann auch als ein Abstellen des Fahrzeuges verstanden werden. Insbesondere kann das Fahrzeug in dem abgeschalteten Zustand mittels einer Antriebseinheit, bspw. einem Motor wie einem elektrischen Motor, nicht angetrieben werden. Bspw. kann ein Fahrer des Fahrzeuges durch einen Abschaltknopf und/oder durch einen Fahrzeugschlüssel das Fahrzeug abschalten. Alternativ oder zusätzlich ist auch denkbar, dass das Fahrzeug unter Voraussetzung zumindest einer Bedingung selbst abschaltet. Hierbei ist bspw. an eine Start-/Stoppfunktion eines Fahrzeuges zu denken.

Das Erkennen des Abschaltbefehls für das Abschalten des Fahrzeuges kann bspw. von einer Kontrollvorrichtung, insbesondere einer Steuereinheit, des Fahrzeuges erkannt werden.

Das Kathodeneingangsventil und/oder das Kathodenausgangsventil und/oder das Anodengaseingangsventil und/oder das Anodengasausgangsventil sind insbesondere in der Nähe des Brennstoffzellenstapels des Brennstoffzellensystems und/oder direkt an dem Brennstoffzellenstapel angeordnet. Bspw. sind das Kathodeneingangsventil und/oder das Kathodenausgangsventil und/oder das Anodengaseingangsventil und/oder das Anodengasausgangsventil in einem Bereich von 1 bis 100 cm, insbesondere in einem Bereich von 5 bis 50 cm, beabstandet zu dem Brennstoffzellenstapel des Brennstoffzellensystems angeordnet.

Als Kathodenbereich ist insbesondere der Fluidraum anzusehen, welcher sich fluidtechnisch zwischen dem Kathodeneingangsventil, dem Brennstoffzellenstapel und dem Kathodenausgangsventil ausbildet. Als Anodenbereich ist insbesondere der Fluidraum anzusehen, welcher sich fluidtechnisch zwischen dem Anodeneingangsventil, dem Brennstoffzellenstapel und dem Anodenausgangsventil ausbildet.

Die elektrische Lastvorrichtung kann bspw. ein elektrischer Verbraucher des Fahrzeuges sein. Insbesondere ist die elektrische Lastvorrichtung eine variable Lastvorrichtung. Mit anderen Worten kann die elektrische Last, welche durch die elektrische Lastvorrichtung bereitgestellt wird, verändert werden. Insbesondere kann die elektrische Last der variablen Lastvorrichtung in Abhängigkeit einer erfassten Spannung über den Brennstoffzellenstapel eingestellt werden. Vorzugsweise wird die elektrische Last der variablen Lastvorrichtung mit geringer werdender erfasster Spannung über den Brennstoffzellenstapel zumindest einmal verringert. Somit kann ein Reduzieren des Sauerstoffes in dem Kathodenbereich des Brennstoffzellenstapels besonders vorteilhaft erfolgen.

Ferner wird insbesondere eine Spannung über den Brennstoffzellenstapel bzw. über den zumindest einen Stapelteil des Brennstoffzellenstapels erfasst, um zu erkennen wann eine vorgegebene Zielspannung über den Brennstoffzellenstapel und/oder über den zumindest einen Stapelteil des Brennstoffzellenstapels erreicht ist. Das Erfassen der Spannung kann bspw. über ein Voltmeter erfolgen.

Die Zielspannung für eine einzelne Brennstoffzelle des Brennstoffzellenstapels kann bspw. ca. 50 mV, insbesondere ca. 30 mV betragen. Wird die Spannung zum Erkennen der Zielspannung über den (kompletten) Brennstoffzellenstapel oder mehrere Brennstoffzellen erfasst, so beträgt die Zielspannung insbesondere ein entsprechend Vielfaches davon. Bei einer derartigen Zielspannung kann insbesondere davon ausgegangen werden, dass der Sauerstoff auf der Kathodenseite bzw. im Kathodenbereich des Brennstoffzellenstapels verbraucht oder im Wesentlichen verbraucht ist.

Das elektrische Messsignal ist insbesondere ein Spannungsmesssignal, wobei insbesondere als Signalantwort auf das angelegte Spannungsmesssignal eine Stromsignalantwort erfasst wird.

Es ist auch denkbar, dass das elektrische Messsignal insbesondere ein Strommesssignal ist, wobei insbesondere als Signalantwort auf das angelegte Strommesssignal eine Spannungssignalantwort erfasst wird.

Das Anlegen des elektrischen Messsignals erfolgt insbesondere mittels einer Anlegevorrichtung. Ferner erfolgt insbesondere das Erfassen der Signalantwort mittels einer Erfassungsvorrichtung. Außerdem erfolgt insbesondere das Ermitteln von Informationen wenigstens über den zumindest einen Stapelteil des Brennstoffzellenstapels des Brennstoffzellensystems mittels einer Ermittlungsvorrichtung.

Die Informationen über den zumindest einen Stapelteil des Brennstoffzellenstapels bzw. den Brennstoffzellenstapel können bspw. Informationen über einen Feuchtezustand des Brennstoffzellenstapels bzw. einer Komponente oder mehrerer Komponenten des Brennstoffzellenstapels und/oder Informationen über einen Alterungszustand des Brennstoffzellenstapels bzw. einer Komponente oder mehrerer Komponenten des Brennstoffzellenstapels und/oder Informationen über einen elektrischen Widerstandszustand des Brennstoffzellenstapels bzw. einer Komponente oder mehrerer Komponenten des Brennstoffzellenstapels sein.

Durch das Schließen des Kathodeneingangsventils sowie des Kathodenausgangsventils nach dem Abschalten des Fahrzeuges, dem anschließenden Anlegen einer elektrischen Lastvorrichtung bis eine vorgegebene Zielspannung erreicht ist und dem anschließenden Schließen des Anodeneingangsventils sowie des Anodenausgangsventils können die Brennstoffzellen des Brennstoffzellenstapels bzw. der Brennstoffzellenstapel in einen definierten Zustand gebracht werden. Der definierte Zustand ist insbesondere ein Wasserstoff/Stickstoff - Zustand (H2/N2-Zustand). Somit können insbesondere Informationen zu ohmschen Widerständen und zu einem Zustand eines lonomers in der Kathode des Brennstoffzellenstapels gewonnen werden, da der Sauerstoff verbraucht oder im Wesentlichen verbraucht ist (somit keine Rolle oder nur eine geringe Rolle spielt).

Es kann von Vorteil sein, wenn bei einem erfindungsgemäßen Verfahren ein Messsignal mit einer sich ändernden Frequenz angelegt wird, um zumindest mehrere Impedanzwerte zu ermitteln, wobei insbesondere ein Messsignal mit einer sich zwischen 100 kHz bis 1 Hz, vorzugsweise zwischen 50 kHz und 100 Hz, ändernden Frequenz angelegt wird. Somit können Informationen über den zumindest einen Stapelteil des Brennstoffzellenstapels des Brennstoffzellensystems besonders einfach gewonnen werden. Es ist denkbar, dass das Messsignal nur für eine Vielzahl an Frequenzen angelegt wird und insbesondere eine Interpolation und/oder Extrapolation, bspw. mittels einer Steuereinheit des Fahrzeuges, durchgeführt wird. Somit kann das Ermitteln von Informationen über den zumindest einen Stapelteil des Brennstoffzellenstapels des Brennstoffzellensystems besonders schnell erfolgen. Es kann von Vorteil sein, wenn bei einem erfindungsgemäßen Verfahren aus den ermittelten Impedanzwerten ohmsche Verluste und/oder ein Protonenleitwiderstand des zumindest einen Stapelteils des Brennstoffzellenstapels des Brennstoffzellensystems ermittelt werden. Die ohmschen Verluste können bspw. aus einem Nulldurchgang einer sich aus den ermittelten Impedanzwerten ergebenen Impedanzkurve (Nyquist Auftragung) gewonnen werden. Der Protonenleitwiderstand kann bspw. aus einer Steigung gewonnen werden. Somit können Informationen über den zumindest einen Stapelteil des Brennstoffzellenstapels des Brennstoffzellensystems besonders einfach gewonnen werden. Insbesondere kann aus den ohmschen Verlusten ein Membranzustand, bspw. eine Feuchte einer Membran oder mehrere Membranen, und/oder ein elektrischer Widerstandszustand, bspw. ein Kontaktwiderstand, als Informationen wenigstens über den zumindest einen Stapelteil des Brennstoffzellenstapels des Brennstoffzellensystems ermittelt werden. Alternativ oder zusätzlich kann aus dem Protonenleitwiderstand ein Feuchtezustand einer Elektrode oder mehrerer Elektroden und/oder ein chemischer Degradationszustand eines lonomers oder mehrerer lonomere als Informationen wenigstens über den zumindest einen Stapelteil des Brennstoffzellenstapels des Brennstoffzellensystems ermittelt werden.

Es kann von Vorteil sein, wenn bei einem erfindungsgemäßen Verfahren zeitlich vor dem Abschalten des Fahrzeuges zumindest eine Temperatur des Brennstoffzellenstapels für einen bestimmten Zeitbereich erfasst und abgespeichert wird und/oder dass zeitlich vor dem Abschalten des Fahrzeuges eine von dem Brennstoffzellenstapel abgerufene Leistung für einen bestimmten Zeitbereich erfasst und abgespeichert wird, wobei für das Ermitteln der Informationen wenigstens über den zumindest einen Stapelteil des Brennstoffzellenstapels des Brennstoffzellensystems die erfasste Temperatur des Brennstoffzellenstapels und/oder die erfasste abgerufene Leistung des Brennstoffzellenstapels berücksichtigt werden. Somit kann das Ermitteln von Informationen über den zumindest einen Stapelteil des Brennstoffzellenstapels des Brennstoffzellensystems besonders genau und in Abhängigkeit des Zustandes des Brennstoffzellenstapels kurz vor dem Abschalten des Fahrzeuges erfolgen. Bspw. können in einem Speicher des Fahrzeuges für einen Zeitbereich von 2 bis 20 Minuten, insbesondere für einen Zeitbereich von 5 bis 15 Minuten, zeitlich vor dem Abschalten des Fahrzeuges zumindest eine Temperatur, bspw. eine Temperatur eines Kühlmittels, des Brennstoffzellenstapels erfasst und abgespeichert und/oder eine von dem Brennstoffzellenstapel abgerufene Leistung erfasst und abgespeichert werden. Insbesondere ist das Fahrzeug zeitlich vor dem Abschalten in einem Fahrbetriebsmodus, in welchem sich das Fahrzeug mittels einer Antriebseinheit des Fahrzeuges fortbewegt bzw. fortbewegen kann, bspw. durch ein Drücken eines Gaspedals. Zum Berücksichtigen der erfassten Temperatur und/oder der abgerufenen Leistung für das Ermitteln der Informationen wenigstens über den zumindest einen Stapelteil des Brennstoffzellenstapels können bspw. Referenzdaten in dem Fahrzeug und/oder in einer Cloud hinterlegt sein. Somit kann ein Einfluss der Temperatur und/oder der abgerufenen Leistung vor dem Abschalten des Fahrzeuges beim Ermitteln der Informationen berücksichtig werden.

Es kann von Vorteil sein, wenn ein erfindungsgemäßes Verfahren nach dem Abschalten des Fahrzeuges in einem kontinuierlich andauernden Abschaltzustand des Fahrzeuges zeitlich hintereinander mehrmals durchgeführt wird, insbesondere zeitlich hintereinander in bestimmten Zeitabständen mehrmals durchgeführt wird. Somit kann ein Verlauf der Informationen über den zumindest einen Stapelteil des Brennstoffzellenstapels des Brennstoffzellensystems über die Zeit betrachtet werden und ggf. hieraus weitere Informationen gewonnen werden. Es ist denkbar, dass nach dem Abschalten des Fahrzeuges das erfindungsgemäße Verfahren in einem bestimmten Zeitintervall, bspw. alle 5 min, durchgeführt. Wird während dem Durchführen des erfindungsgemäßen Verfahrens ein Einschaltbefehl zum Einschalten des Fahrzeuges erkannt, bspw. durch die Erkennungsvorrichtung, wird vorzugsweise das erfindungsgemäße Verfahren in Abhängigkeit einer erwarteten Restzeit abgebrochen. Somit bleibt einem Fahrer des Fahrzeuges bei einer erwarteten langen Restzeit, bspw. einer Restzeit von länger als 5 Sekunden, erspart, auf die Beendigung des Verfahrens warten zu müssen.

Es kann von Vorteil sein, wenn bei einem erfindungsgemäßen Verfahren Referenzdaten in dem Fahrzeug und/oder dass Referenzdaten in einer Cloud hinterlegt sind, wobei für das Ermitteln von Informationen wenigstens über den zumindest einen Stapelteil des Brennstoffzellenstapels des Brennstoffzellensystems (basierend auf dem angelegten Messsignal sowie der erfassten Signalantwort) die Referenzdaten herangezogen werden. Durch das Hinterlegen von Referenzdaten in dem Fahrzeug selbst können Informationen über den zumindest einen Stapelteil des Brennstoffzellenstapels des Brennstoffzellensystems besonders einfach gewonnen werden. Bspw. können die Referenzdaten auf einem Speicher, insbesondere einem nicht-flüchtigen Speicher, des Fahrzeuges hinterlegt bzw. abgespeichert sein. Durch das Hinterlegen von Referenzdaten in der Cloud können die Referenzdaten besonders einfach auf einem aktuellen Stand gehalten werden und Informationen über den zumindest einen Stapelteil des Brennstoffzellenstapels des Brennstoffzellensystems somit besonders genau sein. Die Cloud kann auch als Datenwolke verstanden werden. Die Referenzdaten können bspw. Impedanzwerte und/oder Impedanzkurven aufweisen.

Es kann von Vorteil sein, wenn bei einem erfindungsgemäßen Verfahren Informationen über den kompletten Brennstoffzellenstapel des Brennstoffzellensystems basierend auf dem angelegten Messsignal sowie der erfassten Signalantwort ermittelt werden und/oder dass für mehrere Stapelteile des Brennstoffzellenstapels des Brennstoffzellensystems jeweils Informationen basierend auf einem jeweiligen angelegten Messsignal sowie einer jeweiligen erfassten Signalantwort ermittelt werden. Durch das Ermitteln von Informationen über den kompletten Brennstoffzellenstapel des Brennstoffzellensystems kann eine Gesamtaussage über den Zustand des Brennstoffzellenstapels getroffen werden. Das Ermitteln von Informationen über den kompletten Brennstoffzellenstapel des Brennstoffzellensystems kann vorteilhafterweise besonders schnell erfolgen, da nicht für mehrere Stapelteile des Brennstoffzellenstapels des Brennstoffzellensystems jeweils Informationen gewonnen werden.

Durch das jeweilige Ermitteln von Informationen für mehrere Stapelteile des Brennstoffzellenstapels des Brennstoffzellensystems basierend auf einem jeweiligen angelegten Messsignal sowie einer jeweiligen erfassten Signalantwort kann spezifisch einen jeweiligen Stapelteil der mehreren Stapelteile des Brennstoffzellenstapels bspw. eine jeweilige Aussage über den Zustand eines jeweiligen Stapelteils der mehreren Stapelteile getroffen werden.

Es kann von Vorteil sein, wenn bei einem erfindungsgemäßen Verfahren einem Insassen des Fahrzeuges Hinweise in Abhängigkeit der ermittelten Informationen angezeigt werden. Bspw. kann dem Insassen des Fahrzeuges angezeigt werden, dass das Brennstoffzellensystem bzw. der Brennstoffzellenstapel in Ordnung ist und dieser beruhigt fahren kann. Es ist auch denkbar, dass dem Insassen des Fahrzeuges bei einem kritischen Zustand des Brennstoffzellenstapels als Hinweis angezeigt wird, dass dieser eine gewisse Handlung vornehmen soll, bspw. eine Werkstatt aufsuchen. Der Insasse des Fahrzeuges ist insbesondere als der Fahrer des Fahrzeuges zu verstehen.

Es kann von Vorteil sein, wenn bei einem erfindungsgemäßen Verfahren die nach dem Abschalten des Fahrzeuges ermittelten Informationen bei einem Einschalten des Fahrzeuges für ein Hochfahren des Brennstoffzellensystems berücksichtigt werden, wobei insbesondere zum Berücksichtigen der ermittelten Informationen für das Hochfahren des Brennstoffzellensystems ein Hochfahrablauf des Brennstoffzellensystems basierend auf den ermittelten Informationen bestimmt wird. Somit kann eine Verschlechterung des Brennstoffzellensystems bzw. des Brennstoffzellenstapels besonders vorteilhaft geringgehalten werden. Wird bspw. als Information durch das erfindungsgemäße Verfahren ermittelt, dass der Feuchtzustand einer Elektrode bzw. mehrerer Elektroden des Brennstoffzellenstapels zu gering ist, können bei einem nächsten Einschalten Gegenmaßen ergriffen werden. Ein entsprechender Hochfahrablauf kann bspw. in Abhängigkeit von Referenzdaten, welche bspw. in dem Fahrzeug und/oder einer Cloud hinterlegt sind, bestimmt werden.

Gemäß einem zweiten Aspekt zeigt die vorliegende Erfindung ein Fahrzeug, wobei das Fahrzeug dazu ausgebildet ist, ein erfindungsgemäßes Verfahren zum Ermitteln von Informationen über zumindest einen Stapelteil eines Brennstoffzellenstapels eines Brennstoffzellensystems des Fahrzeuges nach einem Abschalten des Fahrzeuges durchzuführen. Das Fahrzeug umfasst eine Erkennungsvorrichtung zum Erkennen eines Abschaltbefehls für das Abschalten des Fahrzeuges. Ferner umfasst das Fahrzeug ein Brennstoffzellensystem mit einem Brennstoffzellenstapel, wobei ein Kathodenbereich des Brennstoffzellenstapels mittels eines Kathodengaseingangsventils und einem Kathodengasausgangsventil fluidtechnisch abriegelbar ist, und wobei ein Anodenbereich des Brennstoffzellenstapels mittels eines Anodengaseingangsventils und einem Anodengasausgangsventil fluidtechnisch abriegelbar ist. Ferner umfasst das Fahrzeug eine wenigstens an den zumindest einen Stapelteil des Brennstoffzellenstapels anlegbare elektrische Lastvorrichtung. Ferner umfasst das Fahrzeug eine Anlegevorrichtung zum Anlegen eines elektrischen Messsignals wenigstens an den zumindest einen Stapelteil des Brennstoffzellenstapels. Ferner umfasst das Fahrzeug eine Erfassungsvorrichtung zum Erfassen einer Signalantwort auf das angelegte elektrische Messsignal. Ferner umfasst das Fahrzeug eine Ermittlungsvorrichtung zum Ermitteln von Informationen wenigstens über den zumindest einen Stapelteil des Brennstoffzellenstapels des Brennstoffzellensystems basierend auf dem angelegten Messsignal sowie der erfassten Signalantwort.

Vorzugsweise werden zum Durchführen des erfindungsgemäßen Verfahrens bereits für den Betrieb des Brennstoffzellensystems benötigte Mittel bzw. Geräte, bspw. eine Steuereinheit, verwendet.

Ferner umfasst das Fahrzeug insbesondere eine Spannungserfassungsvorrichtung, bspw. ein Voltmeter zum Erfassen einer Spannung über den Brennstoffzellenstapel und/oder über den zumindest einen Stapelteil des Brennstoffzellenstapels, um erkennen zu können, wann eine vorgegebene Zielspannung über den Brennstoffzellenstapel und/oder über den zumindest einen Stapelteil des Brennstoffzellenstapels erreicht ist. Das Erkennen, dass eine vorgegebene Zielspannung erreicht ist, kann bspw. mittels einer Kontrollvorrichtung erfolgen.

Das Fahrzeug gemäß dem zweiten Aspekt der Erfindung weist damit dieselben Vorteile auf, wie sie bereits zu dem Verfahren gemäß dem ersten Aspekt der Erfindung beschrieben worden sind.

Gemäß einem dritten Aspekt zeigt die vorliegende Erfindung ein Computerprogrammprodukt, umfassend Befehle, die bewirken, dass ein Fahrzeug, insbesondere ein erfindungsgemäßes Fahrzeug, Verfahrensschritte gemäß einem erfindungsgemäßen Verfahren ausführt.

Das Computerprogrammprodukt kann als computerlesbarer Anweisungscode implementiert sein. Das Computerprogrammprodukt kann ferner sowohl zumindest teilweise mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein.

Das Computerprogrammprodukt gemäß dem dritten Aspekt der Erfindung weist damit dieselben Vorteile auf, wie sie bereits zu dem Verfahren gemäß dem ersten Aspekt der Erfindung bzw. dem Fahrzeug gemäß dem zweiten Aspekt der Erfindung beschrieben worden sind.

Gemäß einem vierten Aspekt zeigt die vorliegende Erfindung ein computerlesbares Medium, auf dem ein erfindungsgemäßes Computerprogrammprodukt gespeichert ist.

Insbesondere kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein.

Das computerlesbare Medium gemäß dem vierten Aspekt der Erfindung weist damit dieselben Vorteile auf, wie sie bereits zu dem Verfahren gemäß dem ersten Aspekt der Erfindung bzw. dem Fahrzeug gemäß dem zweiten Aspekt der Erfindung bzw. dem Computerprogrammprodukt gemäß dem dritten Aspekt der Erfindung beschrieben worden sind.

Gemäß einem fünften Aspekt zeigt die vorliegende Erfindung ein Datenträgersignal, das ein erfindungsgemäßes Computerprogrammprodukt überträgt.

Insbesondere kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann.

Das Datenträgersignal gemäß dem fünften Aspekt der Erfindung weist damit dieselben Vorteile auf, wie sie bereits zu dem Verfahren gemäß dem ersten Aspekt der Erfindung bzw. dem Fahrzeug gemäß dem zweiten Aspekt der Erfindung bzw. dem Computerprogrammprodukt gemäß dem dritten Aspekt der Erfindung bzw. dem computerlesbaren Medium gemäß dem vierten Aspekt der Erfindung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedenen Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen schematisch:
- Fig. 1: ein Verfahren, und
- Fig. 2: ein Fahrzeug.

In den nachfolgenden Figuren werden für die gleichen technischen Merkmale auch von unterschiedlichen Ausführungsbeispielen identische Bezugszeichen verwendet.

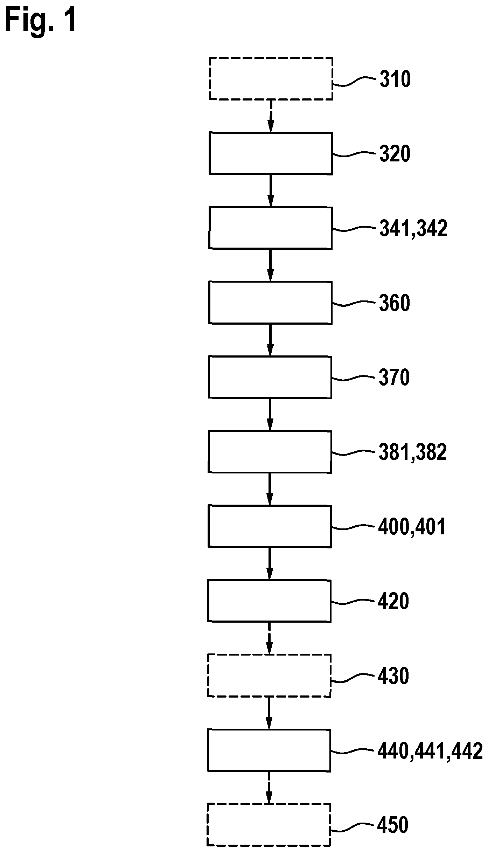

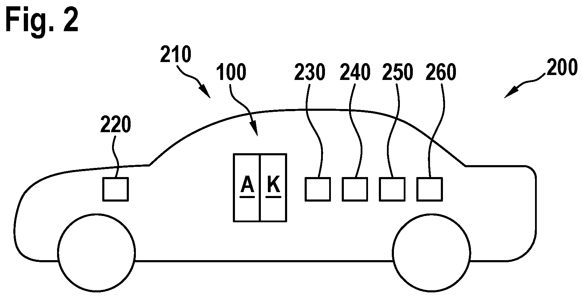

Fig. 1 offenbart ein Verfahren zum Ermitteln von Informationen über zumindest einen Stapelteil eines Brennstoffzellenstapels 100 eines Brennstoffzellensystems 210 eines Fahrzeuges 200 nach einem Abschalten des Fahrzeuges 200 (siehe hierzu bspw. Fig. 2). Das Verfahren umfasst als einen Schritt ein Erkennen 320 eines Abschaltbefehls für das Abschalten des Fahrzeuges 200. Ferner umfasst das Verfahren als einen Schritt ein Schließen 341, insbesondere ein vollständiges Schließen, eines Kathodengaseingangsventils des Brennstoffzellensystems 210 sowie ein Schließen 342, insbesondere ein vollständiges Schließen, eines Kathodengasausgangsventils des Brennstoffzellensystems 210, um einen Kathodenbereich K des Brennstoffzellenstapels 100 mit einem in dem Kathodenbereich K befindlichen Luftgemisch fluidtechnisch abzuriegeln, wenn der Abschaltbefehl erkannt wird. Ferner umfasst das Verfahren als einen Schritt ein Anlegen 360 einer elektrischen Lastvorrichtung 230, bspw. einem elektrischen Verbraucher, wenigstens an den zumindest einen Stapelteil des Brennstoffzellenstapels 100, um den Anteil des Sauerstoffes in dem Luftgemisch in dem abgeriegelten Kathodenbereich K des Brennstoffzellenstapels 100 zu reduzieren, wobei die Lastvorrichtung 230 zumindest derart lange angelegt wird, bis eine vorgegebene Zielspannung erkannt wird 370. Ferner umfasst das Verfahren als einen Schritt ein Schließen 381, insbesondere ein vollständiges Schließen, eines Anodengaseingangsventils des Brennstoffzellensystems 210 sowie ein Schließen 382, insbesondere eine vollständiges Schließen, eines Anodengasausgangsventils des Brennstoffzellensystems 210, um einen Anodenbereich A des Brennstoffzellenstapels 100 mit einem in dem Anodenbereich A befindlichen Brennstoffgemisch fluidtechnisch abzuriegeln, wenn die vorgegebene Zielspannung erkannt wird. Ferner umfasst das Verfahren als einen Schritt ein Anlegen 400 eines elektrischen Messsignals, bspw. eines Spannungsmesssignals und/oder eines Strommesssignals, wenigstens an den zumindest einen Stapelteil des Brennstoffzellenstapels 100, insbesondere wenn das Anodengaseingangsventil und das Anodengasausgangsventil geschlossen ist. Ferner umfasst das Verfahren als einen Schritt ein Erfassen 420 einer Signalantwort auf das angelegte elektrische Messsignal. Ferner umfasst das Verfahren als einen Schritt ein Ermitteln 440 von Informationen wenigstens über den zumindest einen Stapelteil des Brennstoffzellenstapels 100 des Brennstoffzellensystems 210 basierend auf dem angelegten Messsignal sowie der erfassten Signalantwort, bspw. durch ein Vergleichen mit Referenzdaten. Insbesondere können die nach dem Abschalten des Fahrzeuges 200 ermittelten Informationen bei einem Einschalten des Fahrzeuges 200 für ein Hochfahren des Brennstoffzellensystems 210 berücksichtigt werden, wobei insbesondere zum Berücksichtigen der ermittelten Informationen für das Hochfahren des Brennstoffzellensystems 210 ein Hochfahrablauf des Brennstoffzellensystems 210 basierend auf den ermittelten Informationen bestimmt wird.

Es kann von Vorteil sein, wenn bei dem Verfahren insbesondere ein Messsignal mit einer sich ändernden Frequenz angelegt wird 401, um zumindest mehrere Impedanzwerte zu ermitteln, wobei insbesondere ein Messsignal mit einer sich zwischen 100 kHz bis 1 Hz, vorzugsweise zwischen 50 kHz und 100 Hz, ändernden Frequenz angelegt wird 401. Es kann ferner von Vorteil sein, wenn bei dem Verfahren insbesondere aus den ermittelten Impedanzwerten ohmsche Verluste und/oder ein Protonenleitwiderstand des zumindest einen Stapelteils des Brennstoffzellenstapels 100 des Brennstoffzellensystems 210 ermittelt werden 430. Aus den (ermittelten) ohmschen Verlusten können ein Membranzustand und/oder ein elektrischer Widerstandszustand als Informationen wenigstens über den zumindest einen Stapelteil des Brennstoffzellenstapels 100 des Brennstoffzellensystems 210 ermittelt werden 440, bspw. indem die (ermittelten) ohmschen Verluste mit Referenzdaten verglichen werden. Es ist alternativ oder zusätzlich auch denkbar, dass aus dem (ermittelten) Protonenleitwiderstand ein Feuchtezustand einer Elektrode oder mehrerer Elektroden des Brennstoffzellenstapels und/oder ein chemischer Degradationszustand eines lonomers oder mehrerer lonomere des Brennstoffzellenstapels als Informationen wenigstens über den zumindest einen Stapelteil des Brennstoffzellenstapels 100 des Brennstoffzellensystems 210 ermittelt werden 440, bspw. indem der (ermittelte) Protonenleitwiderstand mit Referenzdaten verglichen wird.

Es kann ferner von Vorteil sein, wenn bei dem Verfahren insbesondere zeitlich vor dem Abschalten des Fahrzeuges 200 zumindest eine Temperatur des Brennstoffzellenstapels 100 für einen bestimmten Zeitbereich (direkt vor dem Abschalten) erfasst und abgespeichert wird 310 und/oder dass zeitlich vor dem Abschalten des Fahrzeuges 200 eine von dem Brennstoffzellenstapel 100 abgerufene Leistung für einen bestimmten Zeitbereich (direkt vor dem Abschalten) erfasst und abgespeichert wird 310, wobei für das Ermitteln der Informationen wenigstens über den zumindest einen Stapelteil des Brennstoffzellenstapels 100 des Brennstoffzellensystems 210 die erfasste Temperatur des Brennstoffzellenstapels 100 und/oder die erfasste abgerufene Leistung des Brennstoffzellenstapels 100 berücksichtigt werden.

Es kann ferner von Vorteil sein, wenn das Verfahren nach dem Abschalten des Fahrzeuges 200 in einem kontinuierlich andauernden Abschaltzustand des Fahrzeuges 200 zeitlich hintereinander mehrmals durchgeführt wird, insbesondere zeitlich hintereinander in bestimmten Zeitabständen mehrmals durchgeführt wird.

Es kann ferner von Vorteil sein, wenn bei dem Verfahren insbesondere Referenzdaten in dem Fahrzeug 200 und/oder Referenzdaten in einer Cloud hinterlegt sind, wobei für das Ermitteln von Informationen wenigstens über den zumindest einen Stapelteil des Brennstoffzellenstapels 100 des Brennstoffzellensystems 210 basierend auf dem angelegten Messsignal sowie der erfassten Signalantwort die Referenzdaten herangezogen, insbesondere abgerufen, werden.

Es kann ferner von Vorteil sein, wenn bei dem Verfahren insbesondere Informationen über den kompletten Brennstoffzellenstapel 100 des Brennstoffzellensystems 210, d. h. insbesondere über den Brennstoffzellenstapel 100 als Ganzes, basierend auf dem angelegten Messsignal sowie der erfassten Signalantwort ermittelt werden 441 und/oder dass für mehrere Stapelteile des Brennstoffzellenstapels 100 des Brennstoffzellensystems 210 jeweils Informationen basierend auf einem jeweiligen angelegten Messsignal sowie einer jeweiligen erfassten Signalantwort ermittelt werden 442.

Es kann ferner von Vorteil sein, wenn bei dem Verfahren insbesondere einem Insassen des Fahrzeuges 200 Hinweise in Abhängigkeit der ermittelten Informationen angezeigt werden 450.

Fig. 2 offenbart ein Fahrzeug 200, wobei das Fahrzeug 200 dazu ausgebildet ist, ein erfindungsgemäßes Verfahren (siehe hierzu bspw. Fig. 1) zum Ermitteln von Informationen über zumindest einen Stapelteil eines Brennstoffzellenstapels 100 eines Brennstoffzellensystems 210 des Fahrzeuges 200 nach einem Abschalten des Fahrzeuges 200 durchzuführen. Das Fahrzeug 200 umfasst eine Erkennungsvorrichtung 220 zum Erkennen eines Abschaltbefehls für das Abschalten des Fahrzeuges 200. Ferner umfasst das Fahrzeug 200 ein Brennstoffzellensystem 210 (der Übersichtlichkeit halber ist nur der Brennstoffzellenstapel 100 dargestellt) mit einem Brennstoffzellenstapel 100, wobei ein Kathodenbereich K des Brennstoffzellenstapels 100 mittels eines Kathodengaseingangsventils und einem Kathodengasausgangsventil fluidtechnisch abriegelbar ist, und wobei ein Anodenbereich A des Brennstoffzellenstapels 100 mittels eines Anodengaseingangsventils und einem Anodengasausgangsventil fluidtechnisch abriegelbar ist. Ferner umfasst das Fahrzeug 200 eine wenigstens an den zumindest einen Stapelteil des Brennstoffzellenstapels 100 anlegbare elektrische Lastvorrichtung 230, sodass von dem Brennstoffzellenstapel 100 eine elektrische Leistung bzw. Energie abrufbar ist. Ferner umfasst das Fahrzeug 200 eine (elektrische) Anlegevorrichtung 240 zum Anlegen eines elektrischen Messsignals wenigstens an den zumindest einen Stapelteil des Brennstoffzellenstapels 100. Ferner umfasst das Fahrzeug 200 eine Erfassungsvorrichtung 250 zum Erfassen einer Signalantwort auf das angelegte elektrische Messsignal. Ferner umfasst das Fahrzeug 200 eine Ermittlungsvorrichtung 260 zum Ermitteln von Informationen wenigstens über den zumindest einen Stapelteil des Brennstoffzellenstapels 100 des Brennstoffzellensystems 210 basierend auf dem angelegten Messsignal sowie der erfassten Signalantwort.

## Patentansprüche

1. Verfahren zum Ermitteln von Informationen über zumindest einen Stapelteil eines Brennstoffzellenstapels (100) eines Brennstoffzellensystems (210) eines Fahrzeuges (200) nach einem Abschalten des Fahrzeuges (200), wobei das Verfahren umfasst:
- Erkennen (320) eines Abschaltbefehls für das Abschalten des Fahrzeuges (200),
- Schließen (341) eines Kathodengaseingangsventils des Brennstoffzellensystems (210) sowie Schließen (342) eines Kathodengasausgangsventils des Brennstoffzellensystems (210), um einen Kathodenbereich (K) des Brennstoffzellenstapels (100) mit einem in dem Kathodenbereich (K) befindlichen Luftgemisch fluidtechnisch abzuriegeln, wenn der Abschaltbefehl erkannt wird,
- Anlegen (360) einer elektrischen Lastvorrichtung (230) wenigstens an den zumindest einen Stapelteil des Brennstoffzellenstapels (100), um den Anteil des Sauerstoffes in dem Luftgemisch in dem abgeriegelten Kathodenbereich (K) des Brennstoffzellenstapels (100) zu reduzieren, wobei die Lastvorrichtung (230) zumindest derart lange angelegt wird, bis eine vorgegebene Zielspannung erkannt wird (370),
- Schließen (381) eines Anodengaseingangsventils des Brennstoffzellensystems (210) sowie Schließen (382) eines Anodengasausgangsventils des Brennstoffzellensystems (210), um einen Anodenbereich (A) des Brennstoffzellenstapels (100) mit einem in dem Anodenbereich (A) befindlichen Brennstoffgemisch fluidtechnisch abzuriegeln, wenn die vorgegebene Zielspannung erkannt wird,
- Anlegen (400) eines elektrischen Messsignals wenigstens an den zumindest einen Stapelteil des Brennstoffzellenstapels (100), insbesondere wenn das Anodengaseingangsventil und das Anodengasausgangsventil geschlossen ist,
- Erfassen (420) einer Signalantwort auf das angelegte elektrische Messsignal,
- Ermitteln (440) von Informationen wenigstens über den zumindest einen Stapelteil des Brennstoffzellenstapels (100) des Brennstoffzellensystems (210) basierend auf dem angelegten Messsignal sowie der erfassten Signalantwort.

2. Verfahren nach Anspruch 1,
**dadurch gekennzeichnet,**
**dass** ein Messsignal mit einer sich ändernden Frequenz angelegt wird (401), um zumindest mehrere Impedanzwerte zu ermitteln, wobei insbesondere ein Messsignal mit einer sich zwischen 100 kHz bis 1 Hz, vorzugsweise zwischen 50 kHz und 100 Hz, ändernden Frequenz angelegt wird (401).

3. Verfahren nach Anspruch 2,
**dadurch gekennzeichnet,**
**dass** aus den ermittelten Impedanzwerten ohmsche Verluste und/oder ein Protonenleitwiderstand des zumindest einen Stapelteils des Brennstoffzellenstapels (100) des Brennstoffzellensystems (210) ermittelt werden (430),
und wobei insbesondere aus den ohmschen Verlusten ein Membranzustand und/oder ein elektrischer Widerstandszustand als Informationen wenigstens über den zumindest einen Stapelteil des Brennstoffzellenstapels (100) des Brennstoffzellensystems (210) ermittelt werden (440)
und/oder, wobei insbesondere aus dem Protonenleitwiderstand ein Feuchtezustand einer Elektrode und/oder ein chemischer Degradationszustand eines lonomers als Informationen wenigstens über den zumindest einen Stapelteil des Brennstoffzellenstapels (100) des Brennstoffzellensystems (210) ermittelt werden (440).

4. Verfahren nach einem der vorangegangenen Ansprüche,
**dadurch gekennzeichnet,**
**dass** zeitlich vor dem Abschalten des Fahrzeuges (200) zumindest eine Temperatur des Brennstoffzellenstapels (100) für einen bestimmten Zeitbereich erfasst und abgespeichert wird (310) und/oder dass zeitlich vor dem Abschalten des Fahrzeuges (200) eine von dem Brennstoffzellenstapel (100) abgerufene Leistung für einen bestimmten Zeitbereich erfasst und abgespeichert wird (310), wobei für das Ermitteln der Informationen wenigstens über den zumindest einen Stapelteil des Brennstoffzellenstapels (100) des Brennstoffzellensystems (210) die erfasste Temperatur des Brennstoffzellenstapels (100) und/oder die erfasste abgerufene Leistung des Brennstoffzellenstapels (100) berücksichtigt werden.

5. Verfahren nach einem der vorangegangenen Ansprüche,
**dadurch gekennzeichnet,**
**dass** das Verfahren nach dem Abschalten des Fahrzeuges (200) in einem kontinuierlich andauernden Abschaltzustand des Fahrzeuges (200) zeitlich hintereinander mehrmals durchgeführt wird, insbesondere zeitlich hintereinander in bestimmten Zeitabständen mehrmals durchgeführt wird.

6. Verfahren nach einem der vorangegangenen Ansprüche,
**dadurch gekennzeichnet,**
**dass** Referenzdaten in dem Fahrzeug (200) und/oder dass Referenzdaten in einer Cloud hinterlegt sind, wobei für das Ermitteln von Informationen wenigstens über den zumindest einen Stapelteil des Brennstoffzellenstapels (100) des Brennstoffzellensystems (210) basierend auf dem angelegten Messsignal sowie der erfassten Signalantwort die Referenzdaten herangezogen werden.

7. Verfahren nach einem der vorangegangenen Ansprüche,
**dadurch gekennzeichnet,**
**dass** Informationen über den kompletten Brennstoffzellenstapel (100) des Brennstoffzellensystems (210) basierend auf dem angelegten Messsignal sowie der erfassten Signalantwort ermittelt werden (441) und/oder dass für mehrere Stapelteile des Brennstoffzellenstapels (100) des Brennstoffzellensystems (210) jeweils Informationen basierend auf einem jeweiligen angelegten Messsignal sowie einer jeweiligen erfassten Signalantwort ermittelt werden (442).

8. Verfahren nach einem der vorangegangenen Ansprüche,
**dadurch gekennzeichnet,**
**dass** einem Insassen des Fahrzeuges (200) Hinweise in Abhängigkeit der ermittelten Informationen angezeigt werden (450).

9. Verfahren nach einem der vorangegangenen Ansprüche,
**dadurch gekennzeichnet,**
**dass** die nach dem Abschalten des Fahrzeuges (200) ermittelten Informationen bei einem Einschalten des Fahrzeuges (200) für ein Hochfahren des Brennstoffzellensystems (210) berücksichtigt werden, wobei insbesondere zum Berücksichtigen der ermittelten Informationen für das Hochfahren des Brennstoffzellensystems (210) ein Hochfahrablauf des Brennstoffzellensystems (210) basierend auf den ermittelten Informationen bestimmt wird.

10. Fahrzeug (200), wobei das Fahrzeug (200) dazu ausgebildet ist, ein Verfahren zum Ermitteln von Informationen über zumindest einen Stapelteil eines Brennstoffzellenstapels (100) eines Brennstoffzellensystems (210) des Fahrzeuges (200) nach einem Abschalten des Fahrzeuges (200) gemäß einem der vorangegangenen Ansprüche durchzuführen, wobei das Fahrzeug (200) aufweist:
- eine Erkennungsvorrichtung (220) zum Erkennen eines Abschaltbefehls für das Abschalten des Fahrzeuges (200),
- ein Brennstoffzellensystem (210) mit einem Brennstoffzellenstapel (100), wobei ein Kathodenbereich (K) des Brennstoffzellenstapels (100) mittels eines Kathodengaseingangsventils und einem Kathodengasausgangsventil fluidtechnisch abriegelbar ist, und wobei ein Anodenbereich (A) des Brennstoffzellenstapels (100) mittels eines Anodengaseingangsventils und einem Anodengasausgangsventil fluidtechnisch abriegelbar ist,
- eine wenigstens an den zumindest einen Stapelteil des Brennstoffzellenstapels (100) anlegbare elektrische Lastvorrichtung (230),
- eine Anlegevorrichtung (240) zum Anlegen eines elektrischen Messsignals wenigstens an den zumindest einen Stapelteil des Brennstoffzellenstapels (100),
- eine Erfassungsvorrichtung (250) zum Erfassen einer Signalantwort auf das angelegte elektrische Messsignal,
- eine Ermittlungsvorrichtung (260) zum Ermitteln von Informationen wenigstens über den zumindest einen Stapelteil des Brennstoffzellenstapels (100) des Brennstoffzellensystems (210) basierend auf dem angelegten Messsignal sowie der erfassten Signalantwort.

11. Computerprogrammprodukt, umfassend Befehle, die bewirken, dass ein Fahrzeug (200), insbesondere ein Fahrzeug (200) nach Anspruch 10, Verfahrensschritte gemäß einem Verfahren nach einem der Ansprüche 1 bis 9 ausführt.

12. Computerlesbares Medium, auf dem ein Computerprogrammprodukt nach Anspruch 11 gespeichert ist.

13. Datenträgersignal, das ein Computerprogrammprodukt nach Anspruch 11 überträgt.

## Claims

1. Method for determining information about at least one stacking part of a fuel cell stack (100) of a fuel cell system (210) of a vehicle (200) after the vehicle (200) has been turned off, wherein the method comprises:
- detecting (320) a turn-off command for turning off the vehicle (200),
- closing (341) a cathode gas inlet valve of the fuel cell system (210) and closing (342) a cathode gas outlet valve of the fuel cell system (210) in order to fluidically seal off a cathode region (K) of the fuel cell stack (100) with an air mixture located in the cathode region (K) when the turn-off command is detected,
- attaching (360) an electrical load device (230) at least to the at least one stack part of the fuel cell stack (100) in order to reduce the proportion of oxygen in the air mixture in the sealed-off cathode region (K) of the fuel cell stack (100), wherein the load device (230) is attached at least until a predefined target voltage is detected (370),
- closing (381) an anode gas inlet valve of the fuel cell system (210) and closing (382) an anode gas outlet valve of the fuel cell system (210) in order to fluidically seal off an anode region (A) of the fuel cell stack (100) with a fuel mixture located in the anode region (A) when the predefined target voltage is detected,
- applying (400) an electrical measuring signal at least to the at least one stack part of the fuel cell stack (100), in particular when the anode gas inlet valve and the anode gas outlet valve are closed,
- capturing (420) a signal response to the applied electrical measuring signal,
- determining (440) information at least about the at least one stack part of the fuel cell stack (100) of the fuel cell system (210) based on the applied measuring signal and the captured signal response.

2. Method according to Claim 1,
**characterized**
**in that** a measuring signal with a changing frequency is applied (401) in order to determine at least several impedance values, wherein, in particular, a measuring signal with a frequency changing between 100 kHz and 1 Hz, preferably between 50 kHz and 100 Hz, is applied (401).

3. Method according to Claim 2,
**characterized**
**in that** ohmic losses and/or a proton conductive resistance of the at least one stack part of the fuel cell stack (100) of the fuel cell system (210) are determined (430) from the determined impedance values,
and wherein, in particular, a membrane state and/or an electrical resistance state are determined (440) from the ohmic losses as information at least about the at least one stack part of the fuel cell stack (100) of the fuel cell system (210)
and/or wherein, in particular, a moisture state of an electrode and/or a chemical degradation state of an ionomer is/are determined (440) from the proton conductive resistance as information at least about the at least one stack part of the fuel cell stack (100) of the fuel cell system (210).

4. Method according to one of the preceding claims,
**characterized**
**in that** at least one temperature of the fuel cell stack (100) is captured and stored (310) for a certain time period before the vehicle (200) is turned off, and/or in that a power retrieved by the fuel cell stack (100) is captured and stored (310) for a certain time period before the vehicle (200) is turned off, wherein the captured temperature of the fuel cell stack (100) and/or the captured retrieved power of the fuel cell stack (100) is/are taken into account in the determination of the information at least about the at least one stack part of the fuel cell stack (100) of the fuel cell system (210).

5. Method according to one of the preceding claims,
**characterized**
**in that**, after the vehicle (200) has been turned off, the method is carried out multiple times in succession in a continuously ongoing turned-off state of the vehicle (200), in particular is carried out multiple times in temporal succession at certain time intervals.

6. Method according to one of the preceding claims,
**characterized**
**in that** reference data are stored in the vehicle (200) and/or in that reference data are stored in a cloud, wherein the reference data are used to determine information at least about the at least one stack part of the fuel cell stack (100) of the fuel cell system (210) based on the applied measuring signal and the captured signal response.

7. Method according to one of the preceding claims,
**characterized**
**in that** information about the complete fuel cell stack (100) of the fuel cell system (210) is determined based on the applied measuring signal and the captured signal response (441) and/or in that information is determined for several stack parts of the fuel cell stack (100) of the fuel cell system (210) based on a respective applied measuring signal and a respective captured signal response (442).

8. Method according to one of the preceding claims,
**characterized**
**in that** notifications in accordance with the determined information (450) are displayed to an occupant of the vehicle (200).

9. Method according to one of the preceding claims,
**characterized**
**in that** the information determined after the vehicle (200) has been turned off is taken into account when the vehicle (200) is turned on for a start-up of the fuel cell system (210), wherein, in particular to take into account the determined information for the start-up of the fuel cell system (210), a start-up sequence of the fuel cell system (210) is ascertained based on the determined information.

10. Vehicle (200), wherein the vehicle (200) is designed to carry out a method for determining information about at least one stack part of a fuel cell stack (100) of a fuel cell system (210) of the vehicle (200) after the vehicle (200) has been turned off according to any one of the preceding claims, wherein the vehicle (200) comprises:
- a detection device (220) for detecting a turn-off command for turning off the vehicle (200),
- a fuel cell system (210) having a fuel cell stack (100), wherein a cathode region (K) of the fuel cell stack (100) can be fluidically sealed off by means of a cathode gas inlet valve and a cathode gas outlet valve, and wherein an anode region (A) of the fuel cell stack (100) can be fluidically sealed off by means of an anode gas inlet valve and an anode gas outlet valve,
- an electrical load device (230) which can at least be attached to the at least one stack part of the fuel cell stack (100),
- an application device (240) for applying an electrical measuring signal at least to the at least one stack part of the fuel cell stack (100),
- a capture device (250) for capturing a signal response to the applied electrical measuring signal,
- a determining device (260) for determining information at least about the at least one stack part of the fuel cell stack (100) of the fuel cell system (210) based on the applied measuring signal and the captured signal response.

11. Computer program product comprising commands which cause a vehicle (200), in particular a vehicle (200) according to Claim 10, to perform method steps in accordance with a method according to one of Claims 1 to 9.

12. Computer-readable medium on which a computer program product according to Claim 11 is stored.

13. Data carrier signal which transmits a computer program product according to Claim 11.

## Revendications

1. Procédé de détermination d'informations concernant au moins une partie d'empilement d'un empilement de piles à combustible (100) d'un système de piles à combustible (210) d'un véhicule (200) après un arrêt du véhicule (200), le procédé comprenant :
- la détection (320) d'une commande d'arrêt du véhicule (200),
- la fermeture (341) d'une soupape d'entrée de gaz de cathode du système de piles à combustible (210) et la fermeture (342) d'une soupape de sortie de gaz de cathode du système de piles à combustible (210) afin d'étanchéifier fluidiquement une zone de cathode (K) de l'empilement de piles à combustible (100) au moyen d'un mélange d'air situé dans la zone de cathode (K) lorsque la commande d'arrêt est détectée,
- l'application (360) d'un dispositif de charge électrique (230) au moins à ladite au moins une partie d'empilement de l'empilement de piles à combustible (100) afin de réduire la proportion d'oxygène dans le mélange d'air dans la zone de cathode étanchéifiée (K) de l'empilement de piles à combustible (100), le dispositif de charge (230) étant appliqué au moins jusqu'à ce qu'une tension cible prédéfinie soit détectée (370),
- la fermeture (381) d'une soupape d'entrée de gaz d'anode du système de piles à combustible (210) et la fermeture (382) d'une soupape de sortie de gaz d'anode du système de piles à combustible (210) afin d'étanchéifier fluidiquement une zone d'anode (A) de l'empilement de piles à combustible (100) au moyen d'un mélange combustible situé dans la zone d'anode (A) lorsque la tension cible prédéfinie est détectée,
- l'application (400) d'un signal de mesure électrique au moins à ladite au moins une partie d'empilement de l'empilement de piles à combustible (100), en particulier lorsque la soupape d'entrée de gaz d'anode et la soupape de sortie de gaz d'anode sont fermées,
- la détection (420) d'une réponse de signal au signal de mesure électrique appliqué,
- la détermination (440) d'informations concernant au moins ladite au moins une partie d'empilement de l'empilement de piles à combustible (100) du système de piles à combustible (210) sur la base du signal de mesure appliqué et de la réponse de signal détectée.

2. Procédé selon la revendication 1,
**caractérisé**
**en ce qu'**un signal de mesure à fréquence variable est appliqué (401) pour déterminer au moins une pluralité de valeurs d'impédance, un signal de mesure à fréquence variable étant appliqué (401) en particulier avec une fréquence variant entre 100 kHz et 1 Hz, de préférence entre 50 kHz et 100 Hz.

3. Procédé selon la revendication 2,
**caractérisé**
**en ce que** des pertes ohmiques et/ou une résistance protonique de ladite au moins une partie d'empilement de l'empilement de piles à combustible (100) du système de piles à combustible (210) sont déterminées (430) à partir des valeurs d'impédance déterminées,
et dans lequel un état de membrane et/ou un état de résistance électrique sont déterminés (440), en particulier à partir des pertes ohmiques, en tant qu'informations concernant au moins ladite au moins une partie d'empilement de l'empilement de piles à combustible (100) du système de piles à combustible (210),
et/ou dans lequel un état d'humidité d'une électrode et/ou un état de dégradation chimique d'un ionomère sont déterminés (440), en particulier à partir de la résistance protonique, en tant qu'informations concernant au moins ladite au moins une partie d'empilement de l'empilement de piles à combustible (100) du système de piles à combustible (210).

4. Procédé selon l'une des revendications précédentes,
**caractérisé**
**en ce qu'**au moins une température de l'empilement de piles à combustible (100) est détectée et mémorisée (310) pendant une plage de temps déterminée avant l'arrêt du véhicule (200), et/ou en ce qu'une puissance récupérée de l'empilement de piles à combustible (100) est détectée et mémorisée (310) pendant une plage de temps déterminée avant l'arrêt du véhicule (200), la température détectée de l'empilement de piles à combustible (100) et/ou la puissance récupérée détectée de l'empilement de piles à combustible (100) étant prises en compte la détermination des informations concernant au moins ladite au moins une partie de l'empilement de piles à combustible (100) du système de piles à combustible (210).

5. Procédé selon l'une des revendications précédentes,
**caractérisé**
**en ce qu'**après l'arrêt du véhicule (200), le procédé est exécuté plusieurs fois successivement dans le temps dans un état d'arrêt continu du véhicule (200), en particulier plusieurs fois successivement dans le temps à des intervalles de temps déterminés.

6. Procédé selon l'une des revendications précédentes,
**caractérisé**
**en ce que** des données de référence sont stockées dans le véhicule (200) et/ou en ce que des données de référence sont stockées dans un nuage, les données de référence étant utilisées pour déterminer des informations concernant au moins ladite au moins une partie d'empilement de l'empilement de piles à combustible (100) du système de piles à combustible (210) sur la base du signal de mesure appliqué et de la réponse de signal détectée.

7. Procédé selon l'une des revendications précédentes,
**caractérisé**
**en ce que** des informations concernant l'empilement de piles à combustible complet (100) du système de piles à combustible (210) sont déterminées (441) sur la base du signal de mesure appliqué et de la réponse de signal détectée et/ou en ce que des informations sont déterminées (442) sur la base d'un signal de mesure appliqué et d'une réponse de signal détectée respective pour une pluralité de parties d'empilement de l'empilement de piles à combustible (100) du système de piles à combustible (210).

8. Procédé selon l'une des revendications précédentes,
**caractérisé**
**en ce que** des indications sont ainsi affichées (450) à l'intention d'un occupant du véhicule (200) sur la base des informations déterminées.

9. Procédé selon l'une des revendications précédentes,
**caractérisé**
**en ce que** les informations déterminées après l'arrêt du véhicule (200) sont prises en compte pour un démarrage du système de piles à combustible (210) lors d'une mise en marche du véhicule (210), une séquence de démarrage du système de piles à combustible (200) étant déterminée sur la base des informations déterminées, en particulier pour la prise en compte des informations déterminées pour le démarrage du système de piles à combustible (210).

10. Véhicule (200), ledit véhicule (200) étant conçu pour mettre en œuvre un procédé de détermination d'informations concernant au moins une partie d'empilement d'un empilement de piles à combustible (100) d'un système de piles à combustible (210) du véhicule (200) après l'arrêt du véhicule (200) selon l'une des revendications précédentes, le véhicule (200) comportant :
- un dispositif de détection (220) pour détecter une commande d'arrêt du véhicule (200),
- un système de piles à combustible (210) comprenant un empilement de piles à combustible (100), une zone de cathode (K) de l'empilement de piles à combustible (100) pouvant être étanchéifiée fluidiquement au moyen d'une soupape d'entrée de gaz de cathode et d'une soupape de sortie de gaz de cathode, et une zone d'anode (A) de l'empilement de piles à combustible (100) pouvant être étanchéifiée fluidiquement au moyen d'une soupape d'entrée de gaz d'anode,
- un dispositif de charge électrique (230) pouvant être appliqué au moins à ladite au moins une partie d'empilement de l'empilement de piles à combustible (100),
- un dispositif d'application (240) destiné à appliquer un signal de mesure électrique au moins à ladite au moins une partie d'empilement de l'empilement de piles à combustible (100),
- un appareil de détection (250) pour détecter une réponse de signal au signal de mesure électrique appliqué,
- un dispositif de détermination (260) pour déterminer des informations concernant au moins ladite au moins une partie d'empilement de l'empilement de piles à combustible (100) du système de piles à combustible (210) sur la base du signal de mesure appliqué et de la réponse de signal détectée.

11. Produit de programme informatique, comprenant des instructions qui font qu'un véhicule (200), en particulier un véhicule (200) selon la revendication 10, exécute des étapes de procédé conformément à un procédé selon l'une des revendications 1 à 9.

12. Support lisible par ordinateur, sur lequel est stocké un produit de programme informatique selon la revendication 11.

13. Signal de support de données qui transmet un produit de programme informatique selon la revendication 11.
